# EUROPÄISCHE PATENTANMELDUNG

(11) **EP 3 396 475 A1**
(43) Veröffentlichungstag der Anmeldung: **31.10.2018**
(21) Anmeldenummer: 17168166.1
(22) Anmeldetag: 26.04.2017
(51) Int. Cl.: G05B 13/02

(54) **VERFAHREN ZUR OPTIMIERUNG VON REZEPTPARAMETERN UND NACH DEM VERFAHREN ARBEITENDE STEUERUNGSEINRICHTUNG**

(71) Anmelder: Siemens Aktiengesellschaft, 80333 München (DE)
(72) Erfinder: John, Jean Pascal, 76137 Karlsruhe (DE); Labisch, Daniel, 76149 Karlsruhe (DE); Pfeiffer, Bernd-Markus, 76744 Wörth (DE)

(57) **Zusammenfassung**

Die Erfindung ist ein Verfahren zur Optimierung eines Chargenprozesses, bei dem mittels einer zur Ausführung des Chargenprozesses bestimmten prozesstechnischen Anlage (10) nacheinander einzelne, durch Rezeptparameter bestimmte Chargen gefahren werden, wobei zu einer mittels der Anlage (10) gefahrenen Charge Chargendaten aufgenommen und gespeichert werden, wobei anhand gespeicherter Chargendaten und einer Gütefunktion für einzelne gefahrene Chargen als Gütekriterium jeweils ein Wert der Gütefunktion ermittelt wird und wobei durch Vergleich der ermittelten Werte der Gütefunktion eine beste Charge (42) und deren Rezeptparameter ermittelt werden, sowie eine nach dem Verfahren arbeitende Steuerungseinrichtung (22).

## Beschreibung

Die Erfindung betrifft ein Verfahren zur Optimierung von Rezeptparametern eines Chargenprozesses und eine nach dem Verfahren arbeitende Steuerungseinrichtung.

Chargenprozesse ("Batchprozesse") in verfahrenstechnischen Produktionsanlagen werden auf Basis eines Rezepts gesteuert, indem der Ablauf des Herstellungsprozesses in einzelnen Schritten beschrieben ist. Für jeden Rezeptschritt gibt es einstellbare Parameter, die zum Beispiel eine Dosiermenge bestimmter Edukte, einen Temperatursollwert für eine Reaktionsphase, eine Drehzahl für ein Rührwerk usw. bestimmen. Nach dem Durchlaufen aller Rezeptschritte wird das jeweilige Produkt beispielsweise mithilfe einer Laboranalyse geprüft und es ergibt sich, ob dieses vorgegebene Spezifikationen im Hinblick auf die Produktqualität erfüllt. Für die Rezeptparameter werden aufgrund von Vorab-Versuchen und Erfahrungswissen bestimmte Grenzwerte festgelegt, so dass davon ausgegangen werden kann, dass die Anforderungen an die Produktqualität in den meisten Fällen erfüllt werden. Innerhalb dieser Grenzwerte besteht oft Entscheidungsspielraum bei der genauen Parametrierung des Rezepts. Das technische Problem besteht folglich darin, den verbleibenden Entscheidungsspielraum, also die exakte Festlegung der Rezeptparameter oder einzelner Rezeptparameter innerhalb der definierten Grenzen, dazu zu nutzen, die Prozessführung unter wirtschaftlichen Gesichtspunkten zu optimieren, zum Beispiel im Hinblick auf eine Minimierung von Energie- und/oder Rohstoffeinsatz, Maximierung der Ausbeute und dergleichen.

Bisher wurde oftmals keine explizite Optimierung durchgeführt oder das Problem rein empirisch gelöst. Aufgrund der zahlreichen Rezeptparameter und der kombinatorischen Komplexität wird dabei meist keine wirklich optimale Lösung gefunden. In vielen Fällen ist nicht einmal bekannt, wie das verbleibende Optimierungspotenzial ist.

In Einzelfällen wird eine rigorose Modellierung aller physikalischen, thermodynamischen und/oder chemischen/biologischen Vorgänge im betrachteten verfahrenstechnischen Apparat durchgeführt, um das Optimierungsproblem mithilfe von Simulationen des Prozessmodells zu lösen. Die modellbasierte Vorgehensweise ist zielführend, wenn eine hinreichend genaue Modellierung gelingt. In vielen Fällen ist sie aber wegen des mit der Modellbildung verbundenen erheblichen Aufwands und/oder fehlendem Prozesswissen nicht zu rechtfertigen.

Eine Aufgabe der vorliegenden Erfindung besteht folglich darin, eine einfache und effiziente Möglichkeit zur Optimierung eines Chargenprozesses anzugeben.

Aus der EP 3 104 240 A1 ist eine Einrichtung und ein Verfahren zur Optimierung eines Arbeitspunktes für den Betrieb einer automatisierten prozesstechnischen Anlage bekannt. Dort wird ein historischer Datenbestand, der beim früheren Betrieb der Anlage erfasst und abgespeichert wurde, ausgewertet, um herauszufinden, welcher der anhand der abgespeicherten Daten bestimmten Arbeitspunkte, die bei einem früheren Betrieb der Anlage erfasst wurden, im Lichte eines definierten Gütekriteriums der Beste ist.

Der Ansatz in der EP 3 104 240 A1 ist auf einen kontinuierlichen Prozess beschränkt und ist dort am Beispiel eines Trocknungsprozesses erläutert. Die EP 3 104 240 A1 liefert folglich noch keine Lösung zur Optimierung eines Chargenprozesses.

Für einen Chargenprozess wird die oben genannte Aufgabe erfindungsgemäß mittels eines Verfahrens mit den Merkmalen des Anspruchs 1 gelöst. Dazu ist bei einem Verfahren zur Optimierung eines Chargenprozesses, bei dem mittels einer zur Ausführung des Chargenprozesses bestimmten prozesstechnischen Anlage nacheinander einzelne, durch Rezeptparameter bestimmte Chargen gefahren werden, Folgendes vorgesehen: Zu einer mittels der Anlage gefahrenen Charge werden Chargendaten aufgenommen und gespeichert. Auf Basis einer Gütefunktion, insbesondere einer vorgegebenen oder vorgebbaren Gütefunktion, sowie anhand gespeicherter ("historischer") Chargendaten wird für einzelne gefahrene Chargen jeweils als Gütekriterium ein Wert der Gütefunktion ermittelt. Durch Vergleich der ermittelten Werte der Gütefunktion werden eine beste Charge, also eine bisher optimale Charge, und deren Rezeptparameter ermittelt. Diese Rezeptparameter werden für folgende Chargen verwendet.

Das hier vorgeschlagene und im Folgenden mit weiteren Einzelheiten erläuterte Verfahren umfasst also zumindest die nachfolgenden Schritte:
Erfassen und Abspeichern von hier und im Folgenden als Chargendaten bezeichneten charakteristischen Daten, insbesondere einzelne oder alle Rezeptparameter eines zugrunde liegenden Rezepts und/oder Prozessparameter, zu einer mittels der Anlage gefahrenen Charge.
Ermitteln jeweils eines Werts einer vorgegebenen Gütefunktion als Gütekriterium einzelner gefahrener Chargen anhand der jeweils gespeicherten Chargendaten.
Vergleichen der ermittelten Werte der Gütefunktion zur Ermittlung einer besten Charge und Ermitteln der Rezeptparameter dieser besten Charge.

Das Erfassen und Abspeichern der Chargendaten kann nach jeder gefahrenen Charge erfolgen, kann aber genauso nach jeweils einer bestimmten Anzahl von Chargen, also zum Beispiel nach jeder zweiten Charge, fünften Charge, zehnten Charge usw., oder nach einer zufälligen Anzahl von Chargen erfolgen. Das Ermitteln des Gütekriteriums erfolgt üblicherweise zu jeder Charge, deren Chargendaten erfasst wurden. Auch hier ist allerdings möglich, dass einzelne Chargendaten nicht betrachtet werden und stattdessen das Gütekriterium nur für einzelne Chargendaten ermittelt wird.

Die oben genannte Aufgabe wird ebenfalls mittels einer Steuerungseinrichtung gelöst, die zur Ausführung des Verfahrens und ggf. einzelner Ausführungsformen des Verfahrens bestimmt und eingerichtet ist und beim Betrieb nach dem Verfahren wie hier und im Folgenden beschrieben arbeitet und dazu Mittel zur Durchführung des Verfahrens umfasst. Das im Folgenden beschriebene Verfahren ist zur automatischen Ausführung bevorzugt in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

Des Weiteren gilt zur Vermeidung unnötiger Wiederholungen für die weitere Beschreibung, dass Merkmale und Details, die im Zusammenhang mit dem genannten Verfahren zur Optimierung eines Chargenprozesses sowie eventueller Ausgestaltungen beschrieben sind, selbstverständlich auch im Zusammenhang mit und im Hinblick auf die zur Durchführung des Verfahrens eingerichtete Steuerungseinrichtung und umgekehrt gelten. Dementsprechend kann das Verfahren auch mittels einzelner oder mehrerer Verfahrensmerkmale fortgebildet sein, die sich auf von der Steuerungseinrichtung ausgeführte Verfahrensschritte beziehen, und die Steuerungseinrichtung entsprechend auch durch Mittel zur Ausführung von im Rahmen des Verfahrens ausgeführten Verfahrensschritten fortgebildet sein. Folglich gelten Merkmale und Details, die im Zusammenhang mit dem genannten Verfahren und eventueller Ausgestaltungen beschrieben sind, selbstverständlich auch im Zusammenhang mit und im Hinblick auf die zur Durchführung des Verfahrens bestimmte Steuerungseinrichtung und jeweils umgekehrt, so dass bezüglich der Offenbarung zu den einzelnen Aspekten der Erfindung stets wechselseitig Bezug genommen wird bzw. werden kann.

Der Vorteil der Erfindung besteht darin, dass sehr einfach und effizient günstige Rezeptparameter gefunden werden. Nach jeder Charge (nach jedem Rezeptdurchlauf) kann für deren Chargendaten als Gütekriterium der jeweilige Wert der Gütefunktion ermittelt werden. Bereits nach Ermittlung zweier solcher Gütekriterien können durch einen Vergleich die bessere der beiden zugrunde liegenden Chargen und deren Rezeptparameter ermittelt werden. Je mehr Chargen im Rahmen der Optimierung durch Vergleich der jeweils resultierenden Gütekriterien betrachtet werden, desto mehr kann davon ausgegangen werden, dass die ermittelten Rezeptparameter die optimalen Rezeptparameter darstellen oder zumindest den optimalen Rezeptparametern sehr nahe kommen. Die nach deren Auffindung erfolgende oder zumindest mögliche Verwendung solcher günstiger Rezeptparameter bedeutet eine Optimierung des Chargenprozesses, denn im Vergleich zu den aufgefundenen Rezeptparametern weniger günstige Rezeptparameter werden vermieden.

In die Gütefunktion und damit in das resultierende Gütekriterium können als Rezeptparameter die Soll- und/oder Istwerte von Massen und Mengen der jeweiligen Ausgangsstoffe oder messbaren Prozessvariablen, zum Beispiel Temperaturen, Zeiten und so weiter, einfließen.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer Ausführungsform der Erfindung ist vorgesehen, dass die Rezeptparameter zumindest einen variierbaren Entscheidungsparameter umfassen und dass zur Unterstützung eines Bedieners der Anlage bei der Variation des zumindest einen variierbaren Entscheidungsparameters eine Mehrzahl von Chargen zur Ermittlung einer Reihenfolge entsprechend dem Gütekriterium geordnet wird und die Chargen und deren variierbare Entscheidungsparameter entsprechend der ermittelten Reihenfolge dargestellt werden. Dann lässt sich erkennen, ob der variierbare Entscheidungsparameter Einfluss auf den Wert der Gütefunktion hat und gegebenenfalls welcher variierbare Entscheidungsparameter oder welche der variierbaren Entscheidungsparameter besonderen Einfluss auf den Wert der Gütefunktion hat bzw. haben. Der Bediener kann daraufhin Änderungen an dem variierbaren Entscheidungsparameter oder zumindest einem variierbaren Entscheidungsparameter vornehmen. Dies führt zu veränderten Rezeptdaten und schließlich zu einer mit diesen veränderten Rezeptdaten gefahrenen Charge. Für deren Chargendaten wird im Rahmen des eingangs skizzierten Verfahrens der Wert des Gütekriteriums ermittelt und anhand des Gütekriteriums werden diese Charge und damit die zugrunde liegenden Rezeptdaten mit anderen historischen Daten verglichen. Wenn sich dabei eine neue beste Charge ergibt, werden deren Rezeptparameter für die weitere Verwendung ausgewählt.

Bei einer speziellen Ausführungsform des Verfahrens werden die Chargendaten in Bezug auf eine Einhaltung zumindest einer Nebenbedingung geprüft und Chargendaten, welche zumindest eine Nebenbedingung verletzen, werden bei der Ermittlung der besten Charge nicht berücksichtigt. Entsprechend werden nur diejenigen Chargen in die weitere Verarbeitung einbezogen, die alle Nebenbedingungen erfüllen und eine spezifikationsgemäße Produktqualität geliefert haben. Damit wird sichergestellt, dass die Optimierung der Rezeptparameter nicht auf Kosten der Einhaltung von Spezifikationen beispielsweise im Hinblick auf die Produktqualität und die Sicherheit des Anlagenbetriebs geht. Dies führt auch zu einer Vereinfachung des Verfahrens, indem jede Verletzung zumindest einer Nebenbedingung zu einer Reduktion der Datenmenge führt. Für Chargendaten, die zumindest eine Nebenbedingung verletzen, braucht der Wert der Gütefunktion, als das jeweilige Gütekriterium, nicht ermittelt werden und im Weiteren braucht diese Charge beim Vergleich der ermittelten Werte der Gütefunktion nicht berücksichtigt werden.

Bei einer optionalen weiteren Ausführungsform des Verfahrens werden gespeicherte Chargendaten symbolisch auf einer Zeitachse dargestellt, zum Beispiel in Form einzelner Markierungen auf der Zeitachse, und die als beste Charge ermittelte wird in der Darstellung hervorgehoben. Dies erlaubt einen schnellen Überblick über die zeitliche Entwicklung des Produktionsprozesses.

Bei einer Variante dieser Ausführungsform des Verfahrens werden die gespeicherten Chargendaten symbolisch auf der Zeitachse mittels jeweils einer Markierung dargestellt und eine eventuelle Verletzung einer oder mehrerer Nebenbedingungen wird mittels einer von der Hervorhebung des besten Charge unterschiedlichen graphischen Hervorhebung der jeweiligen Markierung angezeigt. Dann kann die zeitliche Entwicklung des Produktionsprozesses auch bezüglich eventueller Verletzungen von Randbedingungen schnell erfasst werden.

Bei einer weiteren Variante dieser Ausführungsform des Verfahrens werden die gespeicherten Chargendaten symbolisch auf der Zeitachse mittels jeweils einer Markierung dargestellt und eine Anzahl verletzter Nebenbedingungen wird durch eine die jeweilige Anzahl veranschaulichende Markierung (zum Beispiel unterschiedliche Farben und/oder Formen der Markierung in Abhängigkeit von der Anzahl der jeweils verletzten Nebenbedingungen) angezeigt. Dies erlaubt eine schnelle Erkennung solcher Chargen, die wegen einer Verletzung mehrerer oder vieler Nebenbedingungen eventuell eine weitergehende Analyse erfordern.

Bei einer nochmals weiteren Ausführungsform des Verfahrens werden in einer automatisch generierten oder durch einen Benutzer abrufbaren und dann automatisch generierten Bildschirmdarstellung zu der ermittelten besten Charge weitere Informationen, insbesondere zumindest der Wert der Gütefunktion, eingeblendet und in derselben Bildschirmdarstellung werden zu zumindest einer ausgewählten anderen Charge dieselben weiteren Informationen angezeigt, die auch für die beste Charge angezeigt werden. Dies erlaubt einen Vergleich der ermittelten besten Charge mit zumindest einer anderen Charge. Der Umfang dessen, was als weitere Information jeweils angezeigt wird, ist durch den Benutzer auswählbar oder zumindest zum Teil auswählbar. So kann der Benutzer zum Beispiel einzelne Rezept- und/oder Prozessparameter zur Anzeige als weitere Information auswählen. Zusätzlich oder alternativ kann auch vorgesehen sein, dass bei einer Verletzung einer Nebenbedingung durch einen Rezept- oder Prozessparameter bei der zumindest einen anderen Charge automatisch der jeweilige Rezept- oder Prozessparameter auch bei jeder weiteren anderen Charge und der ermittelten besten Charge angezeigt wird.

Nachfolgend wird als Ausführungsbeispiel der Erfindung eine Implementierung des hier vorgeschlagenen Ansatzes in Software anhand der Zeichnung näher erläutert.

Dabei wird ein einfaches Beispiel gezeigt, das im Hinblick auf Datenbestand und Komplexität nicht an typische reale Anwendungen heranreicht, aber doch die Grundidee veranschaulicht. Es handelt sich um die Simulation eines Polymerisationsreaktors nach Chylla-Haase (Quelle: Chylla, R. W.; Haase, D. R.: Temperature Control of Semibatch Polymerization Reactors. in: Computers & Chemical Engineering, Bd. 17, Nr. 3 (1993), S. 257-264).

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Polymerisationsreaktor als Beispiel für eine technische Anlage zur Ausführung eines Chargenprozesses,
- FIG 2: während einer mit dem Reaktor gemäß FIG 1 gefahrenen Charge aufgenommene Messwerte,
- FIG 3: eine Bildschirmdarstellung einer Auswertung mehrerer Chargen,
- FIG 4: und
- FIG 5: nach dem Gütekriterium sortierte Chargen und jeweils zugrunde liegende, beeinflussbare Entscheidungsvariablen,
- FIG 6: ein Kennfeld mit historischen Chargendaten sowie
- FIG 7: eine Bildschirmdarstellung mit Informationen, die einen Bediener einer technischen Anlage gemäß FIG 1 bei deren Überwachung und/oder einer Optimierung des Chargenprozesses unterstützen.

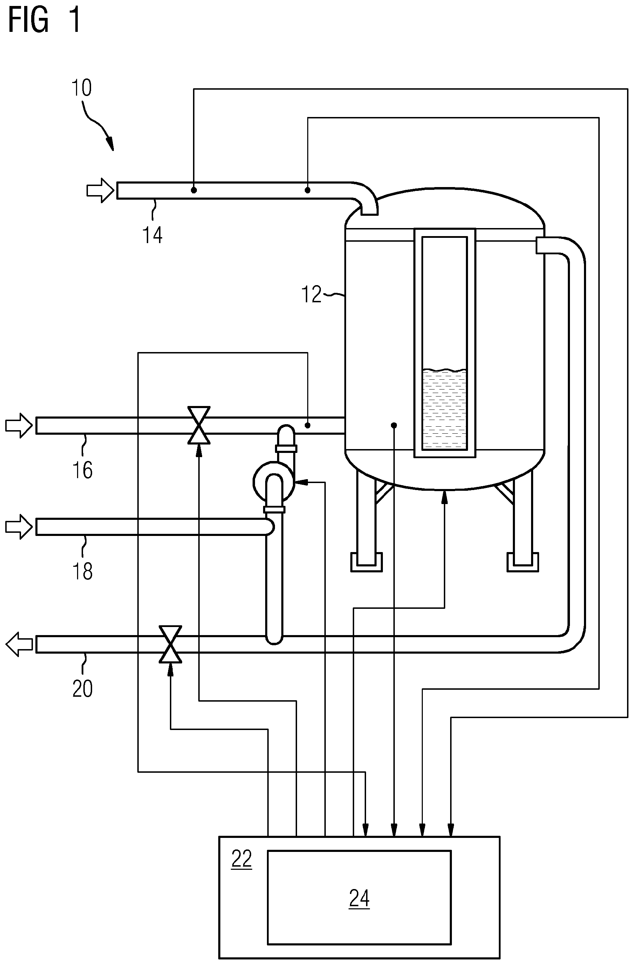

Die Darstellung in FIG 1 zeigt exemplarisch eine technische Anlage 10 zur Ausführung eines Chargenprozesses (prozesstechnische Anlage). Die Anlage 10 umfasst einen als Polymerisationsreaktor fungierenden Reaktor 12. Im Rahmen eines mittels der Anlage 10 ausgeführten technischen Prozesses wird der Reaktor 12 zunächst mit einem Lösungsmittel befüllt und auf eine vorgegebene Zieltemperatur aufgeheizt. Dann wird über eine Zuleitung 14 Monomer zudosiert, das in einer stark exothermen Reaktion zu Polymer umgesetzt wird. Während der Reaktion wird die Temperatur über eine Regelung, zum Beispiel eine Kaskadenregelung (Reaktortemperatur -> Manteltemperatur -> Split-Range -> Ventile für Heizdampf und Kühlwasser), nahezu konstant gehalten und in diesem Zusammenhang über eine Heizdampfzuleitung 16 oder eine Kühlwasserzuleitung 18 Heizdampf bzw. Kühlwasser in den Reaktormantel geleitet. Die Reaktion klingt ab, sobald das Monomer verbraucht ist. Der Reaktor 12 wird dann über eine Abzugsleitung 20 wieder entleert und steht danach für eine nächste Charge zur Verfügung.

Zur Steuerung und/oder Überwachung der Anlage 10 und des mit der Anlage 10 ausgeführten Prozesses ist in grundsätzlich an sich bekannter Art und Weise eine Steuerungseinrichtung 22 vorgesehen. Die Steuerungseinrichtung 22 oder eine weitere, gleiche oder gleichartige Steuerungseinrichtung fungiert auch als Mittel zur Ausführung des hier vorgeschlagenen Verfahrens. Die Steuerungseinrichtung 22 umfasst in grundsätzlich an sich bekannter Art und Weise eine Verarbeitungseinheit in Form von oder nach Art eines Mikroprozessors und einen Speicher, in den beim Betrieb der Steuerungseinrichtung 22 ein durch deren Verarbeitungseinheit ausgeführtes Steuerungsprogramm 24 geladen ist.

Zur Steuerung und/oder Überwachung des mittels der Anlage 10 ausgeführten Prozesses werden mittels der Steuerungseinrichtung 22 und unter Kontrolle des Steuerungsprogramms 24 in grundsätzlich an sich bekannter Art und Weise Sensoren im Prozess, zum Beispiel Temperatursensoren, Füllstandsensoren und dergleichen, ausgelesen und Aktoren, zum Beispiel Ventile oder Motoren und dergleichen, angesteuert.

Das Steuerungsprogramm 24 oder alternativ ein weiteres, mittels der Verarbeitungseinheit der Steuerungseinrichtung 22 ausgeführtes Steuerungsprogramm umfasst eine Implementierung des hier vorgeschlagenen Verfahrens und entsprechend fungiert die Steuerungseinrichtung 22 zusammen mit dem von deren Verarbeitungseinheit beim Betrieb ausgeführten Steuerungsprogramm 24 ebenfalls als Mittel zur Ausführung des hier vorgeschlagenen Verfahrens.

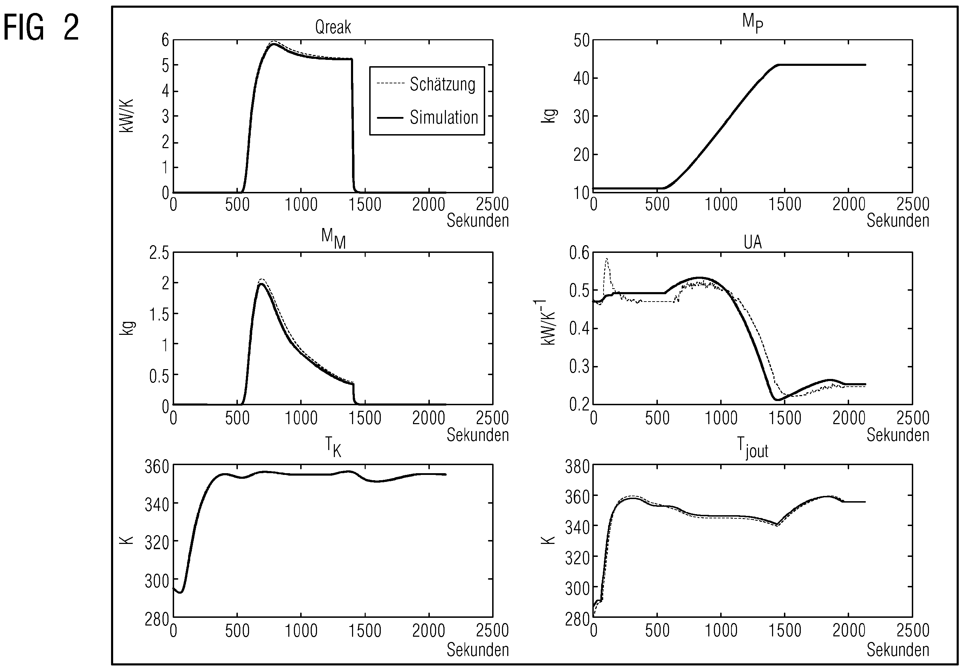

Die Darstellung in FIG 2 zeigt den zeitlichen Verlauf einzelner Messwerte während einer Charge im Polymerisationsreaktor 12. Der Aufheizvorgang ist an der Reaktortemperatur T_{K} erkennbar und dauert etwas mehr als 500s. Tⱼₒᵤₜ ist die entsprechende Temperatur am Ausgang des Kühlmantels des Reaktors 12. Nach Beginn der Dosierung von Monomer steigt die Monomermasse M_{M} im Reaktor 12 zunächst steil an. Durch die Umsetzung zu Polymer wird das Monomer verbraucht und die Polymermasse M_{P} nimmt entsprechend zu. Die von der exothermen Reaktion erzeugte Wärmemenge Qᵣₑₐₖ ist ein Maß für die Reaktionsgeschwindigkeit. UA ist ein Maß für den Wärmeübergang zwischen dem Innenraum des Reaktors 12 und dessen Mantel. Die Darstellung in FIG 2 zeigt geschätzte und simulierte Werte. Für die Automatisierungsfunktionen und für die Optimierung von Rezeptparametern können geschätzte Variablen wie gemessene Variablen behandelt werden.

Folgende Rezeptparameter kommen als Entscheidungsvariablen für eine Optimierung in Frage:
- die Gesamtmenge an Material (Feed), mit dem der Reaktor 12 beschickt wird - im vorgegebenen Fall Monomer (Monomer-Feed),
- die Solltemperatur T_{R} im Innern des Reaktors 12,
- die Starttemperatur T_{S} für den Beginn einer Beschickung des Reaktors 12 mit Monomer.

Die Entscheidungsvariablen werden im Folgenden kurz symbolisch wie folgt bezeichnet:
DecV1 <-> Monomer-Feed
DecV2 <-> Solltemperatur T_{R}
DecV3 <-> Starttemperatur T_{S}

Die Entscheidungsvariable DecV1 (Monomer-Feed) definiert den Massenstrom des Monomers während der Dosierphase.. Die zugehörige Dauer der Beschickung (Feed-Dauer) des Reaktors 12 mit Monomer ergibt sich aufgrund der spezifizierten Gesamtmenge an Monomer pro Charge.

Das Ziel der Optimierung besteht darin, eine bestimmte Menge Polymer so schnell wie möglich zu produzieren. Also soll die Dauer einer einzelnen Charge so kurz wie möglich werden. Das entspricht der Zielsetzung einer Maximierung des Anlagen-Durchsatzes.

Für die Solltemperatur T_{R} des Reaktors 12 bestehen im Hinblick auf die Reaktionskinetik relativ enge Grenzen. Die Isttemperatur des Reaktors 12 wird überwacht. Die maximale Temperatur (Tₘₐₓ) im Reaktor 12 muss im Verlauf der Charge unter einer bestimmten Grenze bleiben. Zur Sicherheit kann auch das Minimum der Stellgröße des Manteltemperatur-Reglers (MinMV) überwacht werden. Der Regler soll einen gewissen Mindestabstand von der unteren Begrenzung einhalten, damit für Notfälle immer noch Reserve-Kühlleistung zur Verfügung steht.

Der Zeitpunkt zum Entleeren des Reaktors 12 ist erreicht, sobald die Polymermasse nicht mehr ansteigt und/oder die Monomermasse auf Null zurückgegangen ist. Damit ist die Charge beendet und der Wert der Gütefunktion, nämlich die Chargendauer t_{C} (BatchTime) definiert.

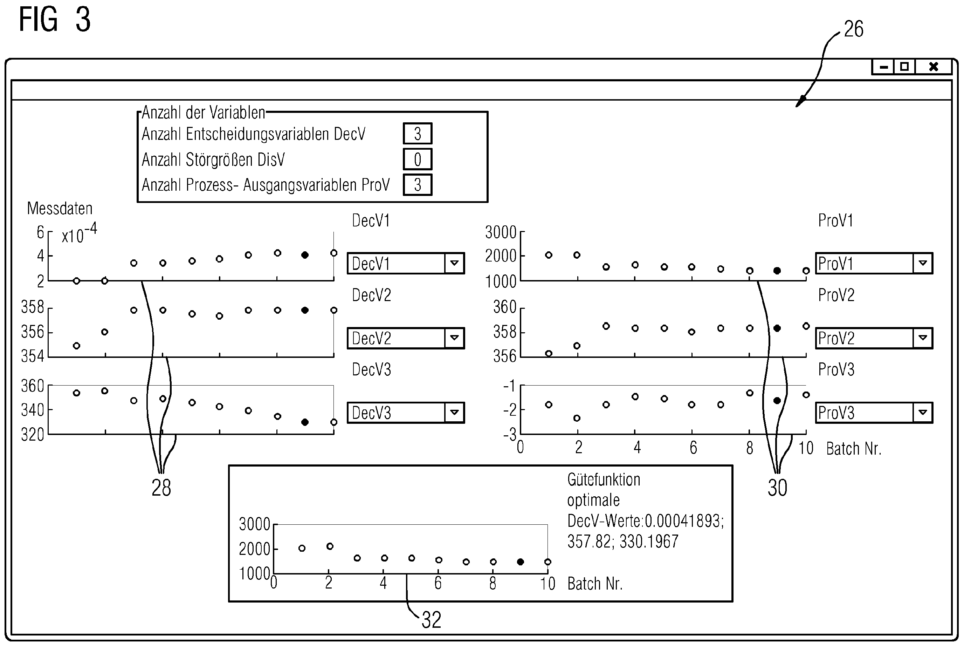

Die Darstellung in FIG 3 zeigt exemplarisch eine automatisch beim Betrieb der Anlage 10 aufgrund automatisch gespeicherter Chargendaten erzeugte Bildschirmdarstellung 26 des Ergebnisses einer Produktion mittels des Reaktors 12 gemäß FIG 1 über mehrere Chargen, hier beispielhaft über zehn Chargen, der Entscheidungsvariablen DecV1=Monomer-Feed, DecV2=Solltemperatur T_{R}, DecV3 Starttemperatur T_{S} (Entscheidungsvariablendarstellung 28) und der Prozessparameter ProV1=t_{C}, ProV2= Tₘₐₓ, ProV3=MinMV (Prozessparameterdarstellung 30). Die gezeigten Entscheidungsvariablen und Prozessparameter jeweils einer Charge sind die gespeicherten Chargendaten dieser Charge.

Jeder Kreis in den Entscheidungsvariablen- und Prozessparameterdarstellungen 28, 30 repräsentiert während einer Charge aufgenommene Chargendaten (Messdaten). Es ist darauf hinzuweisen, dass bei einer realen Anwendung des hier vorgeschlagenen Ansatzes typischerweise die Chargendaten von deutlich mehr als zehn Chargen betrachtet werden und/oder von deutlich mehr Messdaten pro Charge.

Das Gütekriterium als jeweiliger Wert der Gütefunktion der einzelnen Chargen ist in der Darstellung in FIG 3 mittig unter der Darstellung der Entscheidungsvariablen und Prozessparameter gezeigt (Gütedarstellung 32). Der optimale (minimale) Wert der Gütefunktion ist dort mittels eines gefüllten Kreises graphisch hervorgehoben. Beim dargestellten Beispiel ergibt sich für die neunte Charge der optimale (minimale) Wert der Gütefunktion. Die zugehörigen Entscheidungsvariablen und Prozessparameter sind ebenfalls mittels gefüllter Kreise hervorgehoben.

Beim dargestellten Beispiel ist die Besonderheit gegeben, dass der Wert eines der Prozessparameter (ProV1=t_{C}) das Gütekriterium ist. Bei einer realen Anwendung des hier vorgeschlagenen Ansatzes ist das Gütekriterium der jeweilige Wert einer vorgegebenen Gütefunktion. Die Gütefunktion kann eine grundsätzlich beliebige mathematische Funktion sein, die einzelne oder mehrere Rezept- und/oder Prozessparameter miteinander verknüpft und als Ergebnis einen sortierbaren Wert, insbesondere einen sortierbaren numerischen oder skalaren Wert, liefert.

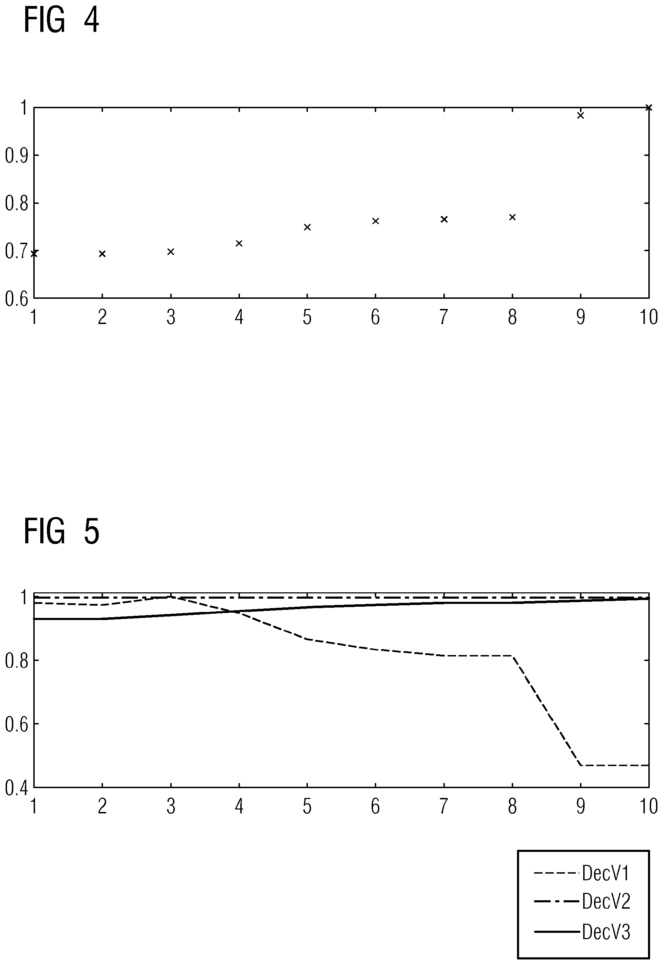

Die Darstellungen in FIG 4 und FIG 5 zeigen eine normierte, nach dem jeweiligen Wert der Gütefunktion sortierte Darstellung der Chargen. Die Darstellung in FIG 4 zeigt den jeweils durch Kreuze dargestellten Wert der Gütefunktion, also das jeweilige Gütekriterium. Die Darstellung in FIG 5 zeigt die Entscheidungsvariablen, die zur besseren Unterscheidbarkeit als Liniengraphen dargestellt sind. Erkennbar ist, dass gute (niedrige) Werte der Gütefunktion nur mit eher hohen Werten der Entscheidungsvariable DecV1 und niedrigen Werten der Entscheidungsvariablen DecV3 erreichbar sind.

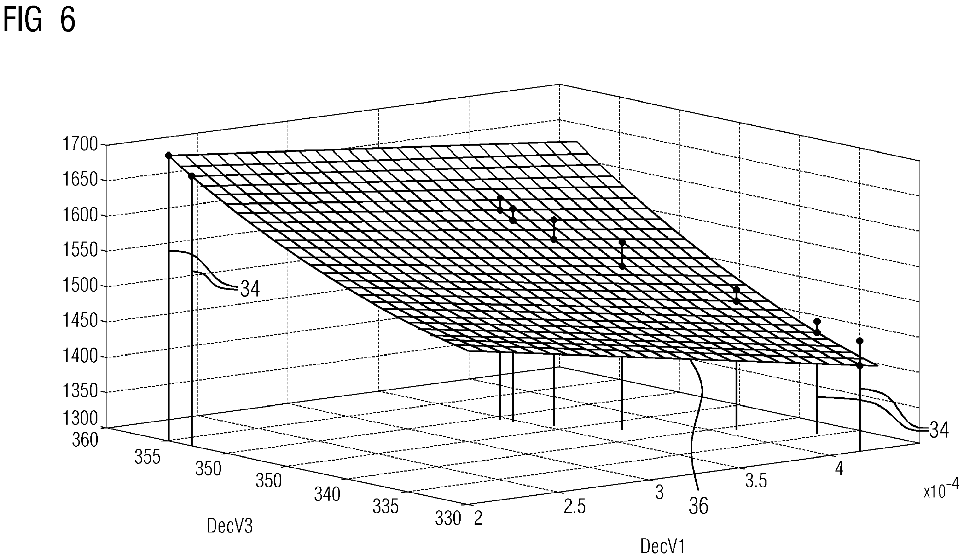

Die Darstellung in FIG 6 zeigt demnach die Abhängigkeit des Werts der Gütefunktion (in vertikaler Richtung aufgetragen) von den Entscheidungsvariablen DecV1 und DecV3 bei einem konstanten Wert von DecV2. Die vertikalen Linien zeigen die Lage historischer Chargendaten 34 (nur einzelne bezeichnet). Das Kennfeld 36 bestätigt, dass hohe Werte von DecV1 und niedrige Werte von DecV3 zielführend sind. Ob eine weitere Optimierung in dieser Richtung möglich ist, hängt von den Nebenbedingungen ab.

Das Kennfeld 36 ist das Ergebnis einer mathematischen Modellierung der Abhängigkeit der Prozessparameter von den Rezeptparametern und messbaren Störgrößen in der sogenannten multiquadratischen Form. Die Parameter der multiquadratischen Form werden per Minimierung der Fehlerquadratsumme über alle Messdaten bestimmt. Damit können Einsichten in die Auswirkung bestimmter Rezeptparameter auf das Prozessverhalten gewonnen werden, zum Beispiel welche Rezeptparameter einen besonders starken Einfluss auf den Prozess haben. Zur Prüfung der Modellgüte ist eine graphische Darstellung der vom Modell berechneten Ausgangsvariablen im Vergleich zu den vorliegenden Messdaten hilfreich.

Da es typischerweise mehr als zwei Rezept- oder Prozessparameter gibt, die einer weiteren Betrachtung unterzogen werden sollen, kann immer nur ein dreidimensionaler Schnitt durch das hochdimensionale Kennfeld visualisiert werden, wie dies in der Darstellung in FIG 6 gezeigt ist. Bei einer solchen Darstellung werden alle anderen Variablen auf bestimmten, vorgegebenen oder vorgebbaren Werten konstant gehalten. Die Visualisierung kann Hinweise darauf geben, wie sich das Gütekriterium in Abhängigkeit von bestimmten Entscheidungsvariablen verhält und ob es gegebenenfalls noch Potenzial zur weiteren Optimierung gibt.

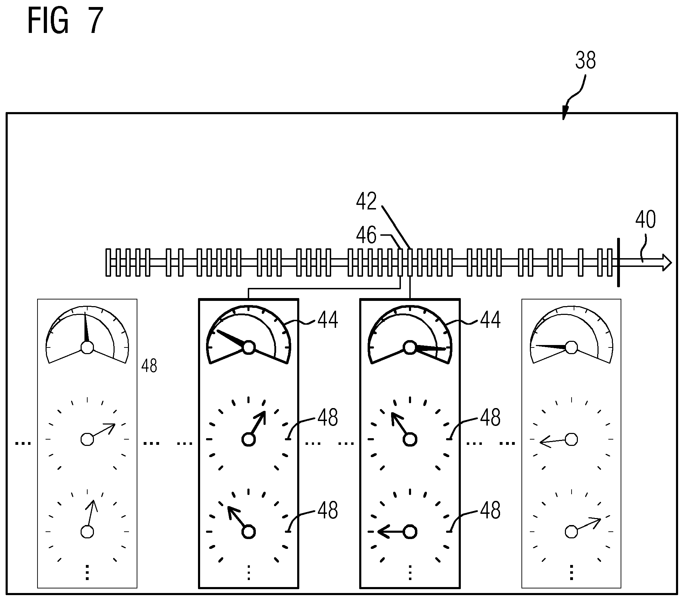

Die Darstellung in FIG 7 zeigt eine weitere im Rahmen des Verfahrens automatisch erzeugte, optional auf Abruf durch den Bediener automatisch erzeugte, Bildschirmdarstellung 38 und veranschaulicht Möglichkeiten zur Unterstützung eines Bedieners einer Anlage 10 gemäß FIG 1 bei der Optimierung des Chargenprozesses. Auf einer Zeitachse 40 sind durch einzelne Markierungen, insbesondere entsprechend ihrem realen zeitlichen Abstand beabstandete Markierungen, einzelne Chargen dargestellt. Die Markierungen stellen die jeweils zu einer Charge gespeicherten Chargendaten und damit letztlich die jeweils zugrunde liegende Charge dar.

Eine historisch beste Charge 42 ("Golden Batch") ist graphisch besonders hervorgehoben, zum Beispiel farblich hervorgehoben. Zu dieser historisch besten Charge 42 werden im unteren Bereich der Bildschirmdarstellung 38 weitere Informationen eingeblendet. Diese umfassen zum Beispiel den jeweiligen Wert der Gütefunktion (Güte 44) und/oder einzelne, insbesondere auswählbare Entscheidungsvariablen 48 oder Mess- und/oder Sollwerte. Parallel zu dieser Anzeige einzelner Informationen zu dieser historisch besten Charge 42 können Informationen zu jeder anderen Charge 46 aufgerufen und im Rahmen der Bildschirmdarstellung 38 eingeblendet werden. In der exemplarischen Darstellung in FIG 7 ist dies für die der historisch besten Charge 42 unmittelbar vorangehende Charge 46 gezeigt. Auch die hierfür eingeblendeten Informationen umfassen den jeweiligen Wert der Gütefunktion (Güte 44) und einzelne, insbesondere auswählbare Entscheidungsvariablen 48. Die gleichzeitige Darstellung dieser Informationen macht die historisch beste Charge 42 für einen Bediener der Anlage 10 mit zumindest einer anderen Charge 46 vergleichbar. Entsprechend werden im Falle einer Auswahl der zu einer Charge 42, 46 dargestellten Entscheidungsvariablen 48 diese sowohl für die historisch beste Charge 42 wie auch für die oder jede jeweilige andere Charge 46 angezeigt, unabhängig davon, ob die Auswahl einer Entscheidungsvariablen 48 oder mehrerer Entscheidungsvariablen 48 im Zusammenhang mit der Darstellung der Informationen zu der historisch besten Charge 42 oder im Zusammenhang mit der Darstellung der Informationen zu der jeweils anderen Charge 46 erfolgt. Wie gezeigt kann die Darstellung neben einer anderen Charge 46 weitere andere Chargen 46 umfassen, so dass sich ein noch besserer Überblick über die historische Entwicklung der Produktion ergibt.

Allgemein liefert eine Bildschirmdarstellung 38, wie dies exemplarisch in der Darstellung in FIG 7 gezeigt ist, einen Überblick über die Entwicklung des Gütekriteriums und einzelner oder mehrerer Entscheidungsvariablen 48 über verschiedene Chargen und Aufträge hinweg und erlaubt eine entsprechende Analyse. Allein schon die Aggregation des Gütekriteriums aus den jeweiligen Prozessparametern liefert einen KPI (Key Performance Indicator), der einen objektiven Vergleich zwischen verschiedenen Chargen (oder sogar Anlagen) ermöglicht und damit die Prozesstransparenz für den Betreiber der jeweiligen Anlage 10 erhöht.

Eine optionale farbliche Markierung der Chargen 42, 46 entsprechend der Einhaltung der Nebenbedingungen erleichtert den Überblick und erlaubt eine zielgerichtete Auswahl einer Darstellung einer einzelnen Charge 46 oder mehrerer Chargen 46. Eine farbige Kennzeichnung der Markierung auf der Zeitachse 40 zeigt zum Beispiel eine Verletzung zumindest einer Nebenbedingung an. Optional kann durch unterschiedliche und/oder unterschiedlich farbige Markierungen auf der Zeitachse 40 die Anzahl jeweils verletzter Nebenbedingungen angezeigt werden. Zusätzlich oder alternativ werden bei einer Auswahl einer Charge 46 zur Darstellung weiterer Informationen diejenigen Entscheidungsvariablen 48, die eine Nebenbedingung verletzen, graphisch hervorgehoben, zum Beispiel farbig hervorgehoben. Dies ermöglicht die Identifikation von Zusammenhängen zwischen den Rezeptparametern und der Einhaltung der Nebenbedingungen. Zusätzlich kann auch der Einfluss einzelner Parameter auf die Erfüllung der gewählten Nebenbedingungen analysiert werden.

Ähnlich wie bei einer Darstellung in FIG 7, bei der die Chargen chronologisch geordnet sind, ist auch eine graphische Darstellung der Chargendaten sortiert nach dem jeweiligen Wert der Gütefunktion, also dem Gütekriterium, möglich. Dies ist nicht separat gezeigt. Eine solche Darstellung umfasst aber zum Beispiel - wie in FIG 7 - den jeweiligen Wert der Gütefunktion und einzelne, insbesondere auswählbare Entscheidungsvariablen 48. Mittels einer solchen Darstellung kann zum Beispiel erkannt werden, dass alle Chargen, die zu einem nahezu optimalen Wert der Gütefunktion geführt haben, sich dadurch auszeichnen, dass bestimmte Rezeptparameter in einem bestimmten Bereich liegen. Ebenso kann erkannt werden, dass bestimmte Werte einzelner Rezeptparameter meistens zu einem schlechten Wert der Gütefunktion führen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Optimierung eines Chargenprozesses sowie eine nach dem Verfahren arbeitende Vorrichtung (Steuerungseinrichtung 22). Im Rahmen des Chargenprozesses werden mittels einer zur Ausführung des Chargenprozesses bestimmten prozesstechnischen Anlage 10 nacheinander einzelne, durch Rezeptparameter bestimmte Chargen gefahren. Im Rahmen des Verfahrens werden zu einer mittels der Anlage 10 gefahrenen Charge Chargendaten aufgenommen und gespeichert. Anhand gespeicherter Chargendaten und einer Gütefunktion wird für einzelne gefahrene Chargen als Gütekriterium jeweils ein Wert der Gütefunktion ermittelt. Durch Vergleich der ermittelten Werte der Gütefunktion werden eine beste Charge 42 und deren Rezeptparameter ermittelt.

## Patentansprüche

1. Verfahren zur Optimierung eines Chargenprozesses, bei dem mittels einer zur Ausführung des Chargenprozesses bestimmten prozesstechnischen Anlage (10) nacheinander einzelne, durch Rezeptparameter bestimmte Chargen gefahren werden,
wobei zu einer mittels der Anlage (10) gefahrenen Charge Chargendaten aufgenommen und gespeichert werden,
wobei auf Basis einer Gütefunktion und anhand gespeicherter Chargendaten für einzelne gefahrene Chargen als Gütekriterium jeweils ein Wert der Gütefunktion ermittelt wird und
wobei durch Vergleich der ermittelten Werte der Gütefunktion eine beste Charge (42) und deren Rezeptparameter ermittelt werden.

2. Verfahren nach Anspruch 1,
wobei die Rezeptparameter zumindest einen variierbaren Entscheidungsparameter umfassen,
wobei eine Mehrzahl von Chargen zur Ermittlung einer Reihenfolge entsprechend dem Gütekriterium geordnet wird,
wobei die Chargen und deren variierbare Entscheidungsparameter entsprechend der ermittelten Reihenfolge dargestellt werden.

3. Verfahren nach Anspruch 1 oder 2,
wobei die Chargendaten in Bezug auf eine Einhaltung zumindest einer Nebenbedingung geprüft werden und
wobei Chargendaten, welche zumindest eine Nebenbedingung verletzen, bei der Ermittlung der besten Charge (42) nicht berücksichtigt werden.

4. Verfahren nach einem der vorangehenden Ansprüche,
wobei gespeicherte Chargendaten symbolisch auf einer Zeitachse (40) dargestellt werden und die ermittelte beste Charge (42) in der Darstellung hervorgehoben ist.

5. Verfahren nach Anspruch 4,
wobei zu der besten Charge (42) weitere Informationen, nämlich zumindest der Wert der Gütefunktion, eingeblendet werden und
wobei zu zumindest einer ausgewählten anderen Charge (46) dieselben weiteren Informationen angezeigt werden, die auch für die beste Charge (42) angezeigt werden.

6. Verfahren nach einem der Ansprüche 4 bis 5,
wobei die gespeicherten Chargendaten symbolisch auf der Zeitachse (40) mittels einer Markierung dargestellt werden und eine eventuelle Verletzung einer oder mehrerer Nebenbedingungen mittels einer graphischen Hervorhebung der jeweiligen Markierung angezeigt wird.

7. Verfahren nach Anspruch 6,
wobei eine Anzahl verletzter Nebenbedingungen durch eine die jeweilige Anzahl veranschaulichende Markierung angezeigt wird.

8. Computerprogramm (24) mit Programmcodemitteln, um alle Schritte von jedem beliebigen der Ansprüche 1 bis 7 durchzuführen, wenn das Computerprogramm (24) auf einer Steuerungseinrichtung (22) zur Steuerung und/oder Überwachung einer zur Ausführung des Chargenprozesses bestimmten prozesstechnischen Anlage (10) ausgeführt wird.

9. Digitales Speichermedium mit elektronisch auslesbaren Steuersignalen, die so mit einer programmierbaren Steuerungseinrichtung (22) einer zur Ausführung des Chargenprozesses bestimmten prozesstechnischen Anlage (10) zusammenwirken können, dass ein Verfahren nach einem der Ansprüche 1 bis 7 ausgeführt wird.

10. Steuerungseinrichtung (22) zur Steuerung und/oder Überwachung einer zur Ausführung des Chargenprozesses bestimmten prozesstechnischen Anlage (10) mit einer Verarbeitungseinheit und einem Speicher, in den ein Computerprogramm (24) nach Anspruch 8 geladen ist, das im Betrieb der Steuerungseinrichtung (22) durch deren Verarbeitungseinheit ausgeführt wird.
